# EUROPÄISCHE PATENTANMELDUNG

(11) **EP 2 589 279 A1**
(43) Veröffentlichungstag der Anmeldung: **08.05.2013**
(21) Anmeldenummer: 12006999.2
(22) Anmeldetag: 09.10.2012
(51) Int. Cl.: A01B 11/00, A01B 13/08

(54) **Bodenbearbeitungsgerät mit vibrationsbeaufschlagten Grubberzinken**

(30) Priorität: 04.11.2011 DE 202011107457 U
(71) Anmelder: Kerner Maschinenbau GmbH, 89344 Aislingen (DE)
(72) Erfinder: Maucher, Christian, 86513 Ursberg-Mindelzell (DE)
(74) Vertreter: Gallo, Wolfgang

(57) **Zusammenfassung**

Bodenbearbeitungsgerät mit einer Anordnung von Grubberzinken, die jeweils an einem Rahmen (1) angeordnet sind und jeweils einen Grubberstiel (2) und an dessen unterem Ende einen in den Boden eingreifenden Grubberschar (3) oder sonstiges Grubberelement aufweisen, wobei jeder Grubberzinken (2, 3) elastisch am Rahmen (1) montiert ist, wobei Mittel (4; 5, 6, 7) zum Beaufschlagen aller oder mindestens einiger Grubberzinken mit Vibrationsschwingungen vorgesehen sind.

## Beschreibung

Die Erfindung betrifft ein Bodenbearbeitungsgerät mit einer Anordnung von an einem Rahmen montierten Grubberzinken zur Bodenlockerung. Die Grubberzinken bestehen dabei aus einem am Rahmen montierten Grubberstiel, an dessen unterem Ende üblicherweise austauschbar angeordneten Grubberschar, das häufig als Flügelschar ausgebildet ist.

Derartige Bodengrubber sind vielfach bekannt. Häufig ist dabei auch der Grubberstiel elastisch am Rahmen aufgehängt, beispielsweise über einen Gummipuffer, oder mittels einer Feder nachgiebig auslenkbar angeordnet, um bei größeren Steinen ein Ausweichen zu ermöglichen und Beschädigungen zu vermeiden.

Aufgabe der Erfindung ist es, ein Bodenbearbeitungsgerät mit Grubberzinken dahingehend zu verbessern, daß eine effektivere Bodenbearbeitung bei möglichst geringer Zugkraft ermöglicht wird.

Diese Aufgabe wird gemäß der Erfindung durch die im Anspruch 1 angegebene Anordnung gelöst. Vorteilhafte Ausgestaltung der Erfindung sind Gegenstand der Unteransprüche.

Bei dem erfindungsgemäßen Bodenbearbeitungsgerät sind die Grubberzinken jeweils vibrationsbeaufschlagt, wobei die Vibrationserzeugung durch jeweils am betreffenden Grubberstiel angeordnete Vibrationsmotoren oder durch von einem zentralen, pneumatischen oder hydraulischen Druckstoßgeber erzeugt und über Druckleitungen zu den einzelnen Grubberstielen übertragen werden, wobei die Vibration vorzugsweise möglichst hochfrequent ist. Durch die Vibrationserzeugung kann eine gewisse Fluidisierung des durch das jeweilige Grubberschar gelockerten Bodens erfolgen, wodurch die Bodenlockerung effizienter wird und die notwendige Zugkraft auf das Bodenbearbeitungsgerät verringert wird.

Die Erfindung wird nachstehend unter Bezugnahme auf die anliegenden schematisierten Zeichnungen in ihren wesentlichen Einzelheiten beschrieben. In den Zeichnungen zeigt:
- Fig. 1: Eine Anordnung von Grubberzinken eines Bodenbearbeitungsgeräts mit Vibrationsmotoren an den Grubberzinken, und
- Fig. 2: eine Anordnung von Grubberzinken eines Bodenbearbeitungsgeräts mit zentraler Druckstoßerzeugung.

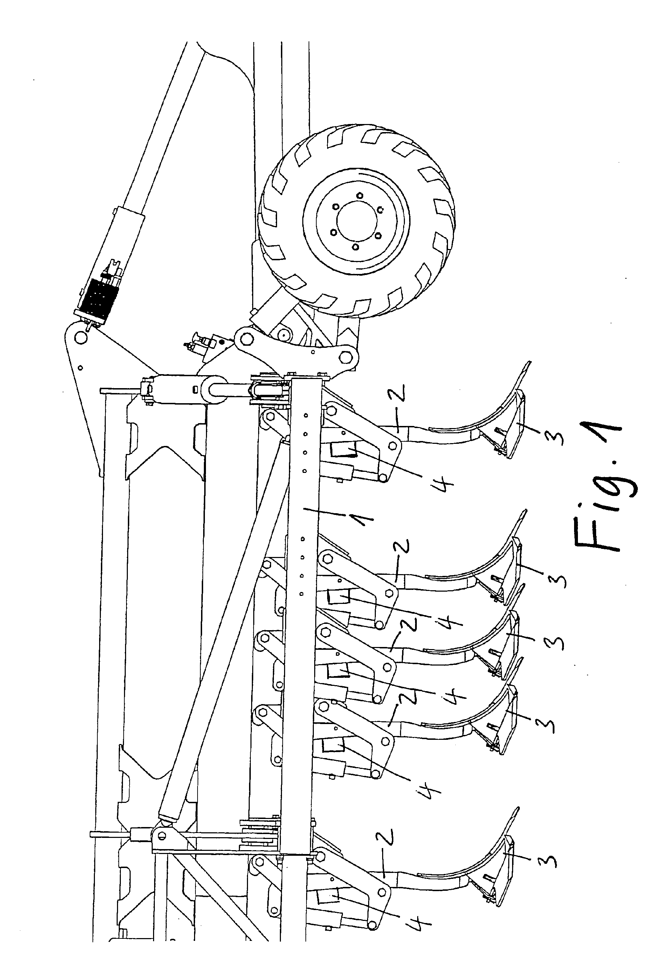

Figur 1 zeigt in Seitenansicht einen Ausschnitt aus der Grubberzinkenanordnung eines Bodenbearbeitungsgeräts.

Die Grubberzinken sind an einem Rahmen 1 angeordnet, der mehrere hintereinander angeordnete Balken aufweist, die jeweils mit über die Arbeitsbreite verteilt angeordneten Grubberzinken bestückt sind.

Jeder Grubberzinken besteht aus einem Grubberstiel 2, an dessen unterem Ende ein Flügelschar 3 angeordnet ist. Die Grubberzinken sind jeweils elastisch am Rahmen 1 montiert. Die elastische Aufhängung im einzelnen ist nicht Gegenstand der Erfindung.

An jedem Grubberzinkenstiel ist ein schematisch dargestellter Vibrationsmotor 4 angeordnet. Dieser kann elektrisch, hydraulisch oder pneumatisch angetrieben werden. Er versetzt den Grubberstiel in Vibrationsschwingungen, die sich auf das Grubberschar 3 übertragen und dieses im Boden vibrieren lassen.

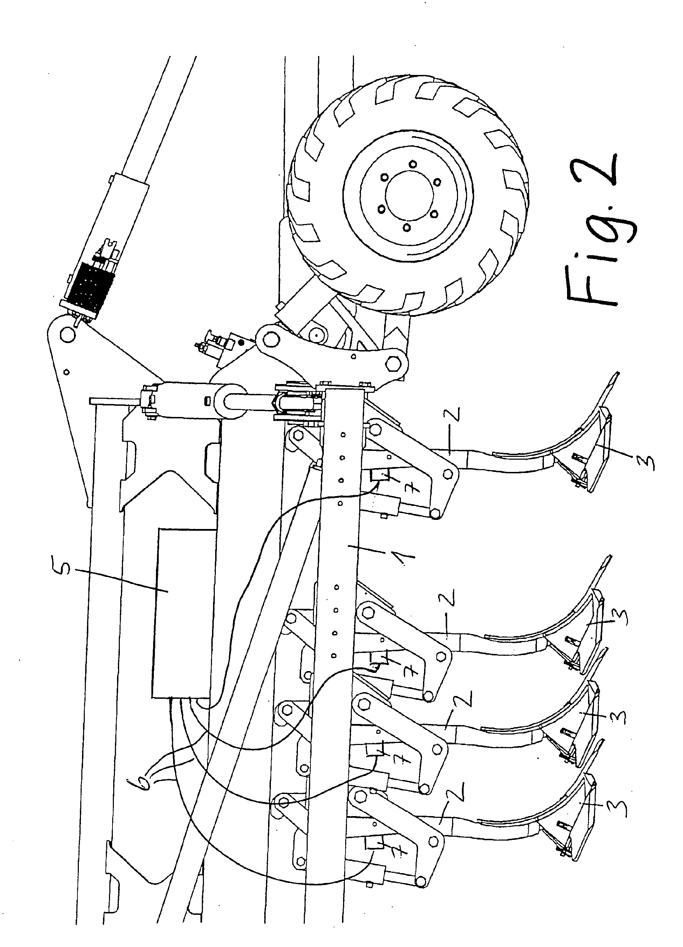

Figur 2 zeigt eine ähnliche Anordnung wie Figur 1. Bei dieser Ausführungsform sind allerdings keine Vibrationsmotoren vorgesehen, die an jedem Grubberzinken angeordnet sind, sondern die Vibrationen werden dadurch erzeugt, daß die Grubberstiele 2 mit hydraulischen oder pneumatischen Druckstößen beaufschlagt werden, die von einem hier nur schematisch als Block dargestellten Druckstoßgeber 5 erzeugt werden, und die über hydraulische oder pneumatische Druckleitungen zu einem an jedem Grubberstiel 2 angeordnetem Druckstoßaufnehmer 7 übertragen werden. Die Druckstöße werden dabei vorzugsweise mit hoher Frequenz erzeugt, so daß ein möglichst hohes Maß an Fluidisierung des gelockerten Bodens im Bereich des Grubberschar erzeugt wird.

Die mit Druckstößen arbeitende Ausführungsform hat gegenüber der mit Vibrationsmotoren arbeitenden Ausführungsform den Vorteil, das Gewicht eingespart werden kann, daß die Grubberzinken ohne jeweils einen Vibrationsmotor eine geringere träge Masse haben, und daß eine höhere Vibrationsfrequenz erreichbar ist als mit Vibrationsmotoren.

## Patentansprüche

1. Bodenbearbeitungsgerät mit einer Anordnung von Grubberzinken, die jeweils an einem Rahmen (1) angeordnet sind und jeweils einen Grubberstiel (2) und an dessen unterem Ende einen in den Boden eingreifenden Grubberschar (3) oder sonstiges Grubberelement aufweisen, wobei jeder Grubberzinken (2, 3) elastisch am Rahmen (1) montiert ist,
**dadurch gekennzeichnet, daß** Mittel (4; 5, 6, 7) zum Beaufschlagen aller oder mindestens einiger Grubberzinken mit Vibrationsschwingungen vorgesehen sind.

2. Bodenbearbeitungsgerät nach Anspruch 1, wobei die Mittel zum Beaufschlagen der Grubberzinken mit Vibrationsschwingungen durch jeweils einen am jeweiligen Grubberstiel (2) angeordneten Vibrationsmotor (4) gebildet sind.

3. Bodenbearbeitungsgerät nach Anspruch 1, wobei die Mittel zum Erzeugen von Vibrationsschwingungen einen Druckimpulsgenerator (5), der pneumatische oder hydraulische Druckimpulse erzeugt, und damit jeweils über Leitungen (6) verbundene Druckimpulsaufnehmer (7) an den Grubberzinken (2, 3) umfassen.
